# EUROPÄISCHE PATENTSCHRIFT

(11) **EP 1 719 743 B1**
(45) Veröffentlichungstag und Bekanntmachung des Hinweises auf die Patenterteilung: **08.08.2007**
(21) Anmeldenummer: 06014573.7
(22) Anmeldetag: 16.10.2003
(51) Int. Cl.: C04B 26/04, C09K 3/10

(54) **Verwendung von in Wasser redispergierbaren Polymerpulvern als Bindemittel für Fugensand**
Use of water redispersible polymer powders as a binding agent for jointing sand
Utilisation de poudres de polymères redispersibles dans l'eau en tant que liant pour du sable de jointement

(30) Priorität: 24.10.2002 DE 10249636
(43) Veröffentlichungstag der Anmeldung: 08.11.2006
(62) Teilanmeldung aus: 03757997.6
(73) Patentinhaber: Wacker Polymer Systems GmbH & Co. KG, 84489 Burghausen (DE)
(72) Erfinder: Gräwe, René, 84489 Burghausen (DE); Trifellner, Gabriele, 84524 Neuötting (DE)
(74) Vertreter: Schuderer, Michael

(56) Entgegenhaltungen:
- EP-A- 0 199 921
- DE-A1- 19 654 152
- CHEMICAL ABSTRACTS, Bd. 119, Nr. 8, 23. August 1993 (1993-08-23), Columbus, Ohio, US; abstract no.: 78628f, Seite 404 XP0000405153 & JP 05 085792 A (M. SUKEKYO) 6. April 1993 (1993-04-06)

## Beschreibung

Die Erfindung betrifft die Verwendung von in Wasser redispergierbaren Polymerpulvern, auf Basis von mit Schutzkolloid stabilisierten Polymerisaten ethylenisch ungesättigter Monomere, als Bindemittel für Fugensand.

Die Verlegung von Kopfsteinpflaster erfolgt in der Regel auf einem Sandbett, wobei zur Befüllung der Fugen zwischen den Pflastersteinen üblicherweise loser Sand oder eine Sandaufschlämmung eingekehrt wird. Nachteilig ist dabei, dass im Laufe der Zeit, beispielsweise bei häufigen Niederschlägen, der Sand aus der Fuge entfernt wird.

Aus der EP-A 401674 sind säurehärtende Aminoharze als Bindemittel für Fugenfüllmassen bekannt. Aus der DE-A 3726293 sind Fugenvergussmassen aus einem emulgierbaren Epoxidharz und Quarzsand bekannt. Die DE-A 4421970 beschreibt ein Fugenmaterial aus Quarzsand, Quarzmehl und einem Polymerbindemittel, wobei flüssige Polybutadienbindemittel verwendet werden. Die EP-A 968977 betrifft Fugenmassen aus einer pastösen Komponente aus Kunstharzdispersion und mineralischen Füllstoffen sowie einer Trockenkomponente aus Zement und Quarzsand. Aus der JP-A 05-085792 ist bekannt, als Fugenfüllmasse ein Gemisch aus Sand und Redispersionspulver auf Basis von Polyvinylester, konkret Vinylacetat-VeoVa-Copolymeren, einzusetzen. Nachteilig ist bei den reaktionsvernetzenden Systemen deren hoher Preis und deren aufwändige Verarbeitung. Fugenfüllmassen mit flüssigen Bindemitteln haben ebenfalls Nachteile bei der Verarbeitung, da diese nicht durch einfaches Einkehren in die Fuge eingebracht werden können. Sandmischungen mit redispergierbaren Polyvinylestern lassen sich zwar leicht verarbeiten, bringen aber nur unzureichende Verfestigung der Fugenfüllmasse.

Es bestand daher die Aufgabe, eine Fugenfüllmasse aus Sand und Bindemittel zur Verfügung zu stellen, welche einen pulverförmigen Binder enthält, welcher zur dauerhaften Verfestigung der Fugenfüllmasse führt.

Gegenstand der Erfindung ist die Verwendung von in Wasser redispergierbaren Polymerpulvern als Bindemittel für Fugensand, dadurch gekennzeichnet, dass funktionalisierte, redispergierbare Polymerpulver aus der Gruppe umfassend
mit Polymerisaten von ethylenisch ungesättigten Mono- oder Dicarbonsäuren oder deren Anhydride, mit einem Säuregehalt von 50 bis 100 Mol-%, stabilisierte Polymerisate von einem oder mehreren Monomeren aus der Gruppe der Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, Diene, Olefine, Vinylaromaten und Vinylhalogenide, im Gemisch mit Sand verwendet werden.

Geeignete Vinylester sind solche von Carbonsäuren mit 1 bis 12 C-Atomen. Bevorzugt werden Vinylacetat, Vinylpropionat, Vinylbutyrat, Vinyl-2-ethylhexanoat, Vinyllaurat, 1-Methylvinylacetat, Vinylpivalat und Vinylester von α-verzweigten Monocarbonsäuren mit 9 bis 13 C-Atomen, beispielsweise VeoVa9^{R} oder VeoVa10^{R} (Handelsnamen der Firma Shell). Besonders bevorzugt ist Vinylacetat.

Geeignete Monomeren aus der Gruppe Acrylsäureester oder Methacrylsäureester sind Ester von unverzweigten oder verzweigten Alkoholen mit 1 bis 15 C-Atomen. Bevorzugte Methacrylsäureester oder Acrylsäureester sind Methylacrylat, Methylmethacrylat, Ethylacrylat, Ethylmethacrylat, Propylacrylat, Propylmethacrylat, n-Butylacrylat, n-Butylmethacrylat, t-Butylacrylat, t-Butylmethacrylat, 2-Ethylhexylacrylat. Besonders bevorzugt sind Methylacrylat, Methylmethacrylat, n-Butylacrylat, t-Butylacrylat und 2-Ethylhexylacrylat.

Als Vinylaromaten bevorzugt sind Styrol, Methylstyrol und Vinyltoluol. Bevorzugtes Vinylhalogenid ist Vinylchlorid. Die bevorzugten Olefine sind Ethylen, Propylen und die bevorzugten Diene sind 1,3-Butadien und Isopren.

Besonders bevorzugt werden Polymerisate, welche ein oder mehrere Monomer-Einheiten aus der Gruppe Vinylacetat, Vinylester von α-verzweigten Monocarbonsäuren mit 9 bis 13 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten. Am meisten bevorzugt werden Polymerisate von Vinylacetat mit Ethylen; von Vinylacetat, Ethylen und einem Vinylester von α-verzweigten Monocarbonsäuren mit 9 bis 13 C-Atomen; von n-Butylacrylat mit 2-Ethylhexylacrylat und/oder Methylmethacrylat; von Styrol mit einem oder mehreren Monomeren aus der Gruppe Methylacrylat, Ethylacrylat, Propylacrylat, n-Butylacrylat, 2-Ethylhexylacrylat; von Vinylacetat mit einem oder mehreren Monomeren aus der Gruppe Methylacrylat, Ethylacrylat, Propylacrylat, n-Butylacrylat, 2-Ethylhexylacrylat und gegebenenfalls Ethylen.

Die Monomerauswahl bzw. die Auswahl der Gewichtsanteile der Comonomere erfolgt dabei so, dass im allgemeinen eine Glasübergangstemperatur Tg von -50°C bis +120°C, vorzugsweise 0°C bis +50°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt:
1/Tg = x₁/Tg₁ + x₂/Tg₂ + ... + xₙ/Tgₙ, wobei xₙ für den Massebruch (Gew.-%/100) des Monomeren n steht, und Tgₙ die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Geeignete Schutzkolloide auf Basis von Polymerisaten von ethylenisch ungesättigten Mono- oder Dicarbonsäuren, für die redispergierbaren Polymerpulver, sind Homo- und Copolymerisate von einem oder mehreren Monomeren aus der Gruppe umfassend Acrylsäure, Methacrylsäure, Fumarsäure, Maleinsäure, sowie Maleinsäureanhydrid. Bevorzugt werden Homo- und Copolymerisate von Acrylsäure, Methacrylsäure und Maleinsäureanhydrid. Besonders bevorzugt sind Polyacrylsäure und Polymethacrylsäure. Bevorzugt sind auch Copolymere mit Acrylsäure-, Methacrylsäure- und Maleinsäure(anhydrid)-Einheiten und Einheiten damit copolymerisierbarer Monomere, wobei der Säureanteil dabei 80 bis 99 Mol-% beträgt. Beispiele für copolymerisierbare Monomere sind Alkene wie Ethylen und Propylen, Vinylaromaten wie Styrol, Acrylsäureester wie Butylacrylat, Methacrylsäureester wie Methylmethacrylat, Alkylvinylether wie Methylvinylether, Methacrylamid und Acrylamid. Beispiele für bevorzugte Copolymere sind Maleinsäure-Methylvinylether-, Methacrylsäure-Methylmethacrylat-, Methacrylsäure-Acrylamid-Copolymere.

Die Molekulargewichte der genannten Schutzkolloide für die redispergierbaren Polymerpulver betragen ≤ 250000 g/mol, vorzugsweise ≤ 150000 g/mol, besonders bevorzugt 5000 bis 50000 g/mol, jeweils bestimmt als Gewichtsmittel Mw, beispielsweise mit Gelpermeationschromatographie. Die carboxylfunktionellen Schutzkolloide sind im allgemeinen in einer Menge von insgesamt 1 bis 40 Gew.-%, bezogen auf das Gesamtgewicht des Basispolymerisats, in dem Redispersionspulver enthalten. Die genannten carboxylfunktionellen Schutzkolloide sind mittels dem Fachmann bekannter Verfahren zugänglich oder im Handel erhältlich.

Die Herstellung der Basispolymerisate für die in Wasser redispergierbaren Polymerpulver erfolgt mittels der gebräulichen Polymerisationsverfahren wie Suspensionspolymerisation und Emulsionspolymerisation bei 40°C bis 100°C, nach Initiierung der Polymerisation mit den gebräuchlichen wasserlöslichen bzw. monomerlöslichen Initiatoren. Bei den genannten Verfahren der Suspensions- und Emulsionspolymerisation wird in Gegenwart von oberflächenaktiven Substanzen wie Schutzkolloiden und/oder Emulgatoren polymerisiert. Nach Abschluß der Polymerisation kann zur Restmonomerentfernung in Anwendung bekannter Methoden nachpolymerisiert werden, oder flüchtige Restmonomere mittels Destillation, und/oder Durchleiten oder Überleiten von inerten Schleppgasen wie Luft, Stickstoff oder Wasserdampf entfernt werden. Zur Herstellung der Polymerpulver werden die wässrigen Dispersionen, gegebenenfalls nach Zusatz von Schutzkolloiden als Verdüsungshilfe, getrocknet, beispielsweise mittels Wirbelschichttrocknung, Gefriertrocknung oder Sprühtrocknung. Vorzugsweise werden die Dispersionen sprühgetrocknet. Der Schutzkolloid-Anteil kann dabei vor, während oder nach der Polymerisation zugegeben werden.

Das funktionalisierte, in Wasser redispergierbare Polymerpulver wird im allgemeinen in einer Menge von 0.5 bis 10 Gew.-%, vorzugsweise 1.0 bis 5.0 Gew.-%, bezogen auf den Sandanteil, eingesetzt. Gegebenenfalls können noch Zusatzstoffe in das Gemisch aus Sand und Redispersionspulver eingearbeitet werden.

Geeignete Zusatzstoffe sind auch Mittel zur Einstellung des pH-Wertes der Redispersion der Polymerpulver. Bei den Polymerpulvern werden vorzugsweise pulverförmige, basische Zusätze wie Calciumcarbonat zugegeben. Die Zusatzmenge beträgt vorzugsweise 5 bis 40 Gew.-%, bezogen auf das Polymerpulver, was im allgemeinen zu einem pH-Wert der Redispersion von pH ≥ 8 führt.

Das Gemisch aus Fugensand, Polymerpulver und gegebenenfalls weiteren Zusätzen wird im trockenen oder feuchten Zustand durch Einfegen in die Fugen zwischen den Pflastersteinen eingebracht.

Mit den genannten basischen Zusätzen wird in der Feuchte die Auflösung des carboxylfunktionellen Schutzkolloids des Polymerpulvers gefördert. Gerade bei kritischen Wetterbedingungen wie Regen, wird damit die Bindekraft des Pulvers verstärkt, und die Auswaschung des Sands aus der Fuge verhindert.

### Beispiele:

### Beispiel 1:

Es wurde eine Mischung aus 95 Gew.-Teilen Normsand T4, 5 Gew.-Teilen eines Polymerpulvers aus einem Vinylacetat-Ethylen-Copolymer (Tg = 9°C) und einer Polyacrylsäure (Mw ca. 20000, 20 Gew.-% bezogen auf Copolymer), sowie 1.1 Gew.-Teile Calciumcarbonat hergestellt.
Diese Mischung wurde in einer Form zu einem quaderförmigen Probekörper mit den Abmessungen 1 cm x 4 cm x 16 cm geformt, und unter Druck zu einer Dichte von 1.56 g/cm³ verfestigt.

### Vergleichsbeispiel 2:

Es wurde analog Beispiel 1 vorgegangen, mit dem Unterschied, dass als Polymerpulver ein Vinylacetat-Ethylen-Copolymer (Tg = 10°C), welches mit einem teilverseiften Polyvinylalkohol (Hydrolysegrad 88 Mol-%, Höppler-Viskosität 4 mPas, 15 Gew.-% bezogen auf Copolymer) stabilisiert war, eingesetzt wurde, und kein basischer Zusatz eingesetzt wurde.

Zur Prüfung der Wasserfestigkeit der Fugenmasse wurde ein Proberohr mit dem Formkörper unten verschlossen, und der Probekörper mit 57 ml Wasser überschichtet. Es wurde der Wasserdurchfluss pro Zeiteinheit und Fläche bestimmt. Die Formkörper wurden unmittelbar nach deren Herstellung und nach 24 Stunden Lagerzeit bei Raumtemperatur getestet.
Je geringer die Durchflussrate ist, umso stabiler der Probekörper und umso fester die Bindung des Formsands.

Es wurden folgende Ergebnisse erhalten:

### Beispiel 1:

Die Wasserdurchlässigkeit des Formkörpers betrug unmittelbar nach dessen Herstellung 21.3 l/m²/min und verbesserte sich nach 24 h auf 3.1 l/m²/min.

### Vergleichsbeispiel 2:

Mit einem herkömmlichen Redispersionspulver konnte keine Bindung des Formkörpers erreicht werden. Die Wasserdurchlässigkeit konnte daher nicht bestimmt werden.

## Patentansprüche

1. Verwendung von in Wasser redispergierbaren Polymerpulvern als Bindemittel für Fugensand, **dadurch gekennzeichnet, dass** funktionalisierte, redispergierbare Polymerpulver aus der Gruppe umfassend
mit Polymerisaten von ethylenisch ungesättigten Mono- oder Dicarbonsäuren oder deren Anhydride, mit einem Säuregehalt von 50 bis 99 Mol-%, stabilisierte Polymerisate von einem oder mehreren Monomeren aus der Gruppe der Vinylester von unverzweigten oder verzweigten Alkylcarbonsäuren mit 1 bis 18 C-Atomen, Acrylsäureester oder Methacrylsäureester von verzweigten oder unverzweigten Alkoholen oder Diolen mit 1 bis 18 C-Atomen, Diene, Olefine, Vinylaromaten und Vinylhalogenide,
im Gemisch mit Sand verwendet werden.

2. Verwendung nach Anspruch 1, **dadurch gekennzeichnet, dass** Copolymerisate welche ein oder mehrere Monomer-Einheiten aus der Gruppe Vinylacetat, Vinylester von α-verzweigten Monocarbonsäuren mit 9 bis 13 C-Atomen, Vinylchlorid, Ethylen, Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Styrol enthalten, welche mit 1 bis 40 Gew.-% eines Schutzkolloides aus der Gruppe der Homo- und Copolymerisate von einem oder mehreren Monomeren aus der Gruppe umfassend Acrylsäure, Methacrylsäure, Fumarsäure, Maleinsäure, sowie Maleinsäureanhydrid stabilisiert sind, verwendet werden.

3. Verwendung nach Anspruch 1 oder 2, **dadurch gekennzeichnet, dass** als Schutzkolloide Polyacrylsäure oder Polymethacrylsäure enthalten ist.

4. Verwendung nach Anspruch 1 oder 2, **dadurch gekennzeichnet, dass** als Schutzkolloide Copolymere mit Acrylsäure-, Methacrylsäure- und Maleinsäure(anhydrid)-Einheiten und Einheiten damit copolymerisierbarer Monomere, wobei der Säureanteil dabei 80 bis 99 Mol-% beträgt, enthalten sind.

5. Verwendung nach Anspruch 1 bis 4, **dadurch gekennzeichnet, dass** die Pulver auf Basis der Copolymerisate noch pulverförmige, basische Zusätze enthalten.

## Claims

1. Use of polymer powders that are redispersible in water as binding agents for jointing sand, **characterized in that** functionalized, redispersible polymer powders from the group consisting of
polymers of one or more monomers from the group consisting of the vinyl esters of straight-chain or branched alkylcarboxylic acids having 1 to 18 carbon atoms, acrylates or methacrylates of branched or straight-chain alcohols or diols having 1 to 18 carbon atoms, dienes, olefins, vinylaromatics and vinyl halides, which polymers are stabilized with polymers of ethylenically unsaturated mono- or dicarboxylic acids or anhydrides thereof, having an acid content of from 50 to 99 mol%,
are used as a mixture with sand.

2. The use as claimed in Claim 1, **characterized in that** copolymers which contain one or more monomer units from the group consisting of vinyl acetate, vinyl esters of α-branched monocarboxylic acids having 9 to 13 carbon atoms, vinyl chloride, ethylene, methyl acrylate, methyl methacrylate, ethyl acrylate, ethyl methacrylate, propyl acrylate, propyl methacrylate, n-butyl acrylate, n-butyl methacrylate, 2-ethylhexyl acrylate and styrene, which are stabilized with from 1 to 40% by weight of a protective colloid from the group consisting of the homo- and copolymers of one or more monomers from the group consisting of acrylic acid, methacrylic acid, fumaric acid, maleic acid and maleic anhydride, are used.

3. The use as claimed in Claim 1 or 2, **characterized in that** polyacrylic acid or polymethacrylic acid is contained as the protective colloids.

4. The use as claimed in Claim 1 or 2, **characterized in that** copolymers comprising acrylic acid, methacrylic acid and maleic acid (anhydride) units and units of monomers copolymerizable therewith, the proportion of acids being from 80 to 99 mol%, are contained as protective colloids.

5. The use as claimed in any of Claims 1 to 4, **characterized in that** the powders based on the copolymers also contain pulverulent, basic additives.

## Revendications

1. Utilisation de polymères en poudre redispersibles dans l'eau en tant que liants pour sable de jointoiement, **caractérisée en ce que** l'on utilise des polymères en poudre fonctionnalisés, redispersibles, du groupe comprenant des polymères d'acides mono- ou dicarboxyliques éthyléniquement insaturés ou leurs anhydrides, avec une teneur en acide de 50 à 99% molaires, des polymères stabilisés d'un ou plusieurs monomères du groupe des esters vinyliques d'acides alkylcarboxyliques non ramifiés ou ramifiés comportant de 1 à 18 atomes de carbone, des esters d'acide acrylique ou des esters d'acide méthacrylique avec des alcools ou des diols ramifiés ou non ramifiés comportant de 1 à 18 atomes de carbone, des diènes, des oléfines, des vinylaromatiques et des halogénures de vinyle, en mélange avec du sable.

2. Procédé suivant la revendication 1, **caractérisé en ce que** l'on utilise des copolymères qui contiennent une ou plusieurs unités monomères du groupe formé par l'acétate de vinyle, des esters vinyliques d'acides monocarboxyliques α-ramifiés comportant de 9 à 13 atomes de C, le chlorure de vinyle, l'éthylène, l'acrylate de méthyle, le méthacrylate de méthyle, l'acrylate d'éthyle, le méthacrylate d'éthyle, l'acrylate de propyle, le méthacrylate de propyle, l'acrylate de n-butyle, le méthacrylate de n-butyle, l'acrylate de 2-éthylhexyle, le styrène, stabilisés avec 1 à 40% en poids d'un colloïde protecteur du groupe formé par des homo- et des copolymères d'un ou plusieurs monomères du groupe comprenant l'acide acrylique, l'acide méthacrylique, l'acide fumarique, l'acide maléique, ainsi que l'anhydride maléique.

3. Utilisation suivant la revendication 1 ou 2, **caractérisée en ce que** du poly(acide acrylique) ou du poly(acide méthacrylique) est présent en tant que colloïde protecteur.

4. Utilisation suivant la revendication 1 ou 2, **caractérisée en ce que** sont présents, en tant que colloïdes protecteurs, des copolymères avec des unités d'acide acrylique, d'acide méthacrylique et d'acide (anhydride) maléique et des unités monomères copolymérisable avec eux, la fraction d'acide étant ici de 80 à 99% molaires.

5. Utilisation suivant les revendications 1 à 4, **caractérisée en ce que** les poudres à base des copolymères contiennent encore des additifs basiques pulvérulents.
